# EUROPÄISCHE PATENTSCHRIFT

(11) **EP 3 129 269 B1**
(45) Veröffentlichungstag und Bekanntmachung des Hinweises auf die Patenterteilung: **16.10.2019**
(21) Anmeldenummer: 15718176.9
(22) Anmeldetag: 09.04.2015
(51) Int. Cl.: B61C 17/04

(54) **STEUEREINRICHTUNG**
CONTROL DEVICE
DISPOSITIF DE COMMANDE

(30) Priorität: 10.04.2014 AT 502732014
(43) Veröffentlichungstag der Anmeldung: 15.02.2017
(73) Patentinhaber: Siemens Mobility GmbH, 1210 Wien (AT)
(72) Erfinder: EDLINGER, Robert, A-1190 Wien (AT); SEITZ, Georg, A-7111 Parndorf (AT)
(74) Vertreter: Deffner, Rolf
(86) Internationale Anmeldenummer: PCT/EP2015/057719
(87) Internationale Veröffentlichungsnummer: WO 2015/155287

(56) Entgegenhaltungen:
- EP-A1- 1 277 638
- EP-A2- 1 705 091
- DE-A1- 19 743 306
- DE-A1-102009 034 681
- DE-U1- 9 304 752
- DE-U1- 9 304 752
- DE-U1- 20 300 016

## Beschreibung

### Technisches Gebiet

Die Erfindung betrifft eine Steuereinrichtung für ein Schienenfahrzeug und ein Schienenfahrzeug.

### Stand der Technik

Schienenfahrzeuge, insbesondere Lokomotiven, Triebwagen, Steuerwagen und Straßenbahnen sind im Allgemeinen mit Steuereinrichtungen ausgestattet mittels welcher der Fahrbetrieb steuerbar ist. Diese Steuereinrichtungen umfassen Eingabeeinrichtungen wie Fahr- und Bremshebel sowie elektrische Schalter und Ausgabeeinrichtungen wie Signallampen oder akustische Warneinrichtungen (Summer). Neuere Fahrzeuge weisen Bildschirme auf, welche eine große Vielzahl an Informationen darstellen können. Dabei werden primäre Informationen (Fahrgeschwindigkeit, Türposition, wesentliche Fehlermeldungen) von sekundären Informationen (Fehlermeldungen ohne Dringlichkeit) unterschieden und jeweils unterschiedlich dargestellt. Eine solche Steuereinrichtung (Fahrerpult) ist bei Zweirichtungsfahrzeugen (z.B. Lokomotiven) an jeder Stirnseite des Fahrzeugs angeordnet, bei Einrichtungsfahrzeugen (z.B. Straßenbahnen) nur an der führenden Stirnseite. Bei Fahrzeugen für einen vollautomatischen Fahrbetrieb, typischerweise U-Bahnen ist jedoch meist trotzdem ein Fahrerpult vorgesehen, welches jedoch nur bei einer Störung der automatischen Steuerung und bei Rangierfahrten verwendet wird. Dieses Fahrerpult, bzw. diese Steuereinrichtung kann dabei als konventioneller Fahrerraum ausgeführt werden, was einen besonders großen Bauraumbedarf erfordert, oder es kann ein (vereinfachtes) Fahrerpult vorgesehen werden, welches bei Nichtgebrauch durch Abdeckklappen verborgen ist. Beiden Ausführungsformen ist gemein, dass sie äußerst kompliziert aufzubauen und teuer sind, da eine große Vielzahl an elektrischen Bauelementen und Leitungen an die Position der Steuereinrichtungen zu führen sind. Dies ist insbesondere bei gekuppelten Zugverbänden nachteilig, da beispielsweise bei zwei gekoppelten Zweirichtungsfahrzeugen vier Fahrerpulte vorgesehen sind, wobei die an den gekoppelten Zugenden nur nach einer Zugtrennung (beispielsweise im Wartungsfall) verwendet werden. Diese, im praktischen Betrieb äußerst selten eingesetzten Steuereinrichtungen verursachen trotzdem Wartungskosten Zum technischen Umfeld wird beispielsweise auf die DE 19743306 A1 und die DE 102009034681 A1 verwiesen.

### Darstellung der Erfindung

Der Erfindung liegt daher die Aufgabe zugrunde, eine Steuereinrichtung für ein Schienenfahrzeug anzugeben, welche insbesondere für den manuellen Betrieb automatischer Fahrzeuge einsetzbar ist und welche sich durch besonders geringen Bauteil- und Installationsaufwand auszeichnet.

Die Aufgabe wird durch eine Steuereinrichtung mit den Merkmalen des Anspruchs 1 und ein Schienenfahrzeug nach Anspruch 5 gelöst. Vorteilhafte Ausgestaltungen sind Gegenstand untergeordneter Ansprüche.

Dem Grundgedanken der Erfindung nach wird eine Steuereinrichtung für ein fahrerstandsloses, vollautomatisch verkehrendes Schienenfahrzeug aufgebaut, welche eine Bedieneinheit mit allen zum Betrieb des Schienenfahrzeugs erforderlichen Ein- und Ausgabevorrichtungen umfasst, wobei die Bedieneinheit mit einem Schienenfahrzeug über eine im Innenraum des Schienenfahrzeugs anordenbare mehrpolige lösbare elektrische Kontaktstelle verbindbar ist, mittels welcher die Bedieneinheit in einer Gebrauchsposition eine Verbindung zu den elektrischen Systemen des Schienenfahrzeugs herstellt.

Dadurch ist der Vorteil erzielbar, ein Fahrerpult schnell einrichten bzw. aufbauen zu können, wobei eine transportable Bedieneinheit alle für den Betrieb des Schienenfahrzeugs erforderlichen Anzeigen und Bedienelemente umfasst und mittels der lösbaren Kontaktstelle alle erforderlichen Signalverbindungen zu der Fahrzeugelektronik herstellt.

Dies ist insbesondere für vollautomatisch verkehrende Schienenfahrzeuge vorteilhaft, da für diese Fahrzeuge bei Einsatz gegenständlicher Erfindung auch keinerlei Notfahrpulte vorzusehen sind. Erfindungsgemäß ist an der Montageposition der Bedieneinheit in dem Schienenfahrzeug eine entsprechend geformte mechanische Schnittstelle für die Bedieneinheit vorzusehen, welche die Fügerichtung und die Endlage der Bedieneinheit in Gebrauchsposition vorgibt, sodass eine rasche und unmissverständliche Montage erfolgen kann. Erfindungsgemäß ist auch diese mechanische Schnittstelle mit einer Blockierung versehen, welche eine Entnahme der Bedieneinheit erst nach einer Freigabe ermöglicht. Diese Freigabe kann beispielsweise mittels eines Schlüsselschalters oder einer Auslösetaste erfolgen.

In weiterer Fortbildung der Erfindung ist es empfehlenswert, die lösbare elektrische Kontaktstelle, welche im Allgemeinen eine hohe Anzahl einzelner Kontakte umfasst, bei Nichtgebrauch mittels einer Abdeckung zu verschließen.

Dadurch kann einerseits eine Beschädigung bzw. Verschmutzung der Kontakte verhindert werden, andererseits ist solcherart eine leichtere Reinigung des Innenraums möglich. Vorbeugend, um Vandalismus zu verhindern ist es zweckmäßig, diese Abdeckung versperrbar zu gestalten.

Die Bedieneinheit kann vorteilhafterweise nach Art eines tragbaren Computers (Notebook) geformt sein, welche klappbar ausgeführt ist und dadurch einen leichten Transport ermöglicht. Die Bedienelemente und ein allenfalls vorhandener Bildschirm sind durch die Klappbauweise bei Nichtgebrauch vor Beschädigung geschützt. Die Bedienelemente sind nach den bei Schienenfahrzeugen üblichen Eingabegeräten auszuführen, wobei Typischerweise ein Fahr/Bremshebel, Türsteuertaster, Notstopptaste, Hupenbetätigung, etc. jeweils als spezifisch geformtes Eingabegerät vorzusehen sind.

Es ist empfehlenswert, den klappbaren Bildschirm der Bedieneinheit in aufgeklappten, vom Bedienpersonal gut einsehbaren Zustand in mindestens einer Position arretierbar zu gestalten, sodass auch bei größeren Beschleunigungen (z.B. Rangierstößen) die Winkellage des Bildschirms unverändert bleibt.

Die Bedieneinheit ist in Gebrauchsposition über die lösbare elektrische Schnittstelle mit elektrischen Einrichtungen des Schienenfahrzeugs verbunden. Diese elektrischen Einrichtungen können beispielsweise die fahrzeugseitige Antriebssteuerung, die Wagensteuerung oder andere elektrische Einrichtungen sein. Es ist empfehlenswert, zur elektrischen Anbindung der Bedieneinheit Datenbussysteme einzusetzen, da solcherart die Anzahl der elektrischen Kontaktstellen wesentlich reduziert werden kann. Für sicherheitskritische Signale (z.B. Notbremsbetätigung, Totmannsteuerung, Antriebssteuerung oder Türbetätigung) ist es empfehlenswert jeweils dezidierte Signale und Kontaktstellen einzusetzen, da solcherart auch bei Störungen des Bussystems noch eine Betätigung erfolgen kann.

### Kurzbeschreibung der Zeichnungen

Es zeigen beispielhaft:
**Fig.1** Blockschaltbild eines Schienenfahrzeugs mit einer Steuereinrichtung.
**Fig.2** Schienenfahrzeug mit einer Aufnahme für eine Steuereinrichtung.
**Fig.3** Schienenfahrzeug mit einer Steuereinrichtung.
**Fig.4** Schienenfahrzeug für vollautomatischen Betrieb.
**Fig.5** Schienenfahrzeug für vollautomatischen Betrieb mit installierter Bedieneinheit.
**Fig.6** Schienenfahrzeug mit einer kabelgebundenen Bedieneinheit.
**Fig.7** Schienenfahrzeug mit einer kabelgebundenen Bedieneinheit, Detail.

### Ausführung der Erfindung

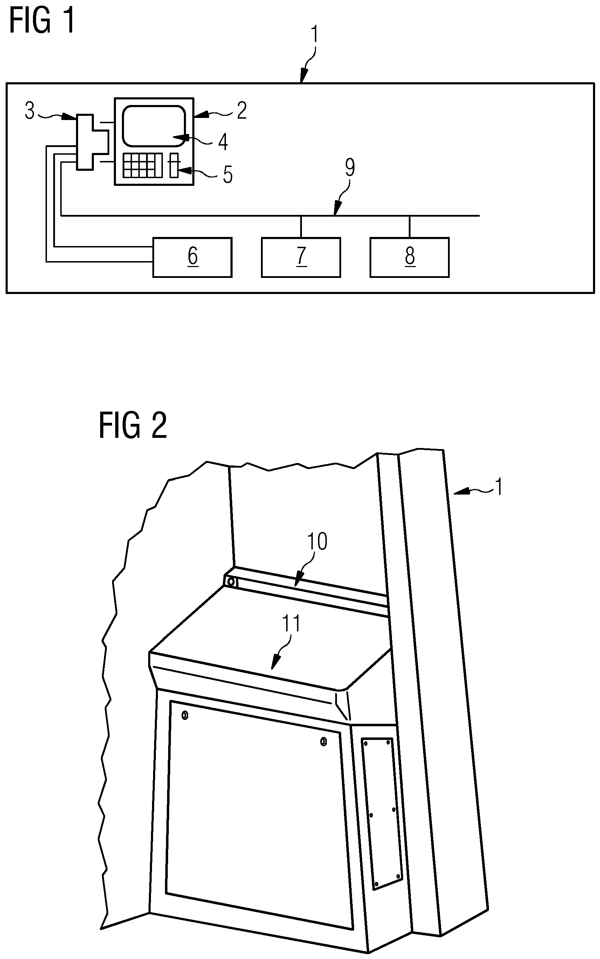

**Fig.1** zeigt beispielhaft und schematisch ein Blockschaltbild eines Schienenfahrzeugs mit einer Steuereinrichtung. Es ist ein Schienenfahrzeug 1 dargestellt, welches elektrische Einrichtungen 6, 7, 8 umfasst, wobei die elektrische Einrichtung 6 eine Antriebssteuerung ist, die die elektrische Einrichtung 7 eine Wagensteuerung ist und die die elektrische Einrichtung 8 eine Kommunikationseinrichtung ist. Es ist eine elektrische Kontaktstelle 3 vorgesehen, zu welcher Signale der elektrischen Einrichtungen 6, 7, 8 geleitet sind. Dabei sind die Signale der Antriebssteuerung 6 direkt zu der elektrischen Kontaktstelle 3 geführt, wobei beispielhaft zwei Signale gezeigt sind. Die Signale der Wagensteuerung 7 und der Kommunikationseinrichtung 8 sind über ein gemeinsames Bussystem 9 an die elektrische Kontaktstelle 3 geführt. Dieses Bussystem 9 kann nach den gebräuchlichen Ausführungsformen eines Bussystems ausgeführt sein, beispielsweise als Datennetz (Ethernet), als Industriebus (I2C), als optischer Bus mit einer Glasfaserverkabelung oder ähnlichem. An die elektrische Kontaktstelle 3 ist lösbar eine Bedieneinheit 2 angebunden, an welche die Signale der elektrischen Einrichtungen 6, 7, 8 zum gegenseitigen Datenaustausch geleitet sind. Die Bedieneinheit 2 ist als tragbares Gerät ausgeführt und umfasst eine als Bildschirm 4 ausgeführte Anzeigeeinrichtung und Eingabeeinrichtungen 5.

**Fig.2** zeigt beispielhaft und schematisch ein Schienenfahrzeug mit einer Aufnahme für eine Steuereinrichtung. Es ist der Innenraum an einem Stirnbereich eines Schienenfahrzeugs 1 dargestellt, welches eine Aufnahme 11 für eine Bedieneinheit 2 aufweist. Eine elektrische Kontaktstelle 3 ist mittels einer Abdeckung 10 vor Berührung und Verschmutzung geschützt. Das in Fig.2 gezeigte Ausführungsbeispiel entspricht einem typischen Nahverkehrsfahrzeug, z.B. eine U-Bahn, welche im Normalbetrieb fahrerlos betrieben wird.

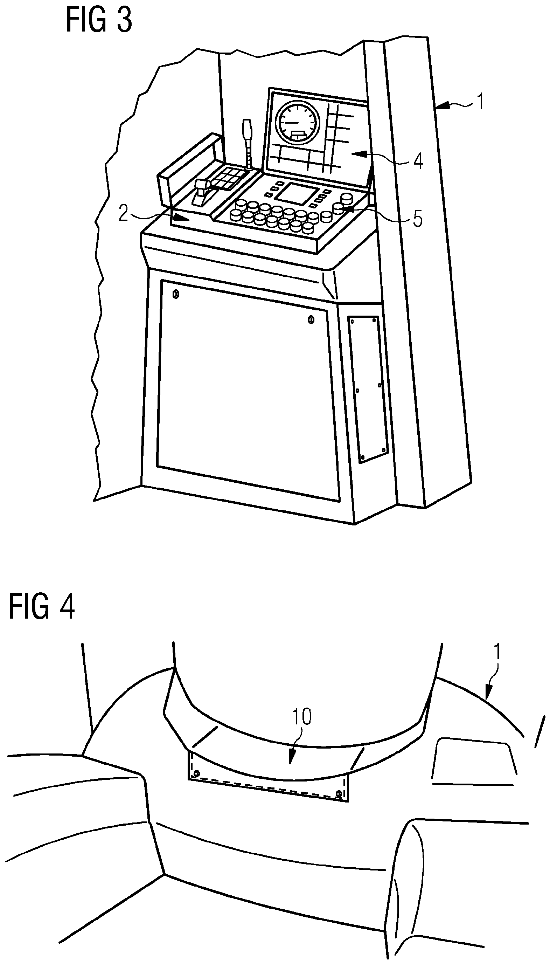

**Fig.3** zeigt beispielhaft und schematisch ein Schienenfahrzeug mit einer Steuereinrichtung. Es ist das Schienenfahrzeug 1 aus Fig.2 dargestellt, wobei eine Bedieneinheit 2 angebracht ist. Die Bedieneinheit 2 umfasst neben einem Bildschirm 4 mehrere Eingabeeinrichtungen 5, insbesondere einen Fahrhebel der ähnlich den fest in Fahrzeugen verbauten Fahrhebeln ausgeführt ist.

**Fig.4** zeigt beispielhaft und schematisch ein Schienenfahrzeug für vollautomatischen Betrieb. Es ist die Stirnseite des Passagierinnenraums eines Schienenfahrzeugs 1 dargestellt, wobei die Stirnseite aus gestalterischen Gründen mit runden Formen versehen ist. Aufgrund dieser runden Formen ist ohne weitere Maßnahmen kein Befestigen einer Bedieneinheit 2 an der Oberfläche der Verkleidungen für einen Notbetrieb möglich, sodass eine Abdeckung 10 vorgesehen ist. Die Abdeckung 10 verschließt eine ebene Aufnahmefläche für eine Bedieneinheit 2.

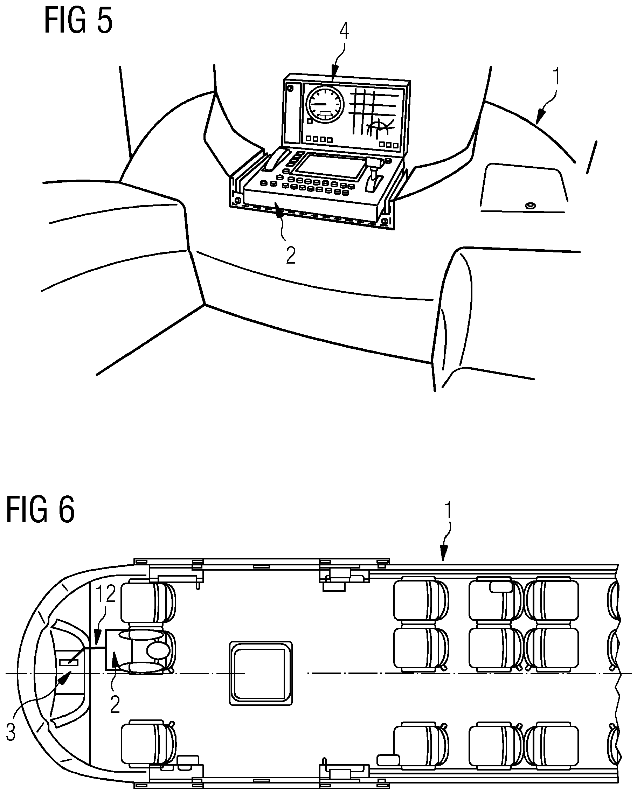

**Fig.5** zeigt beispielhaft und schematisch ein Schienenfahrzeug für vollautomatischen Betrieb mit einer Bedieneinheit. Es ist das Schienenfahrzeug 1 aus Fig.4 dargestellt, wobei die Abdeckung 10 entfernt ist. An die dadurch freiliegende elektrische Kontaktstelle 3 ist eine Bedieneinheit 2 mit einem Bildschirm 4 angeschlossen. Die elektrische Kontaktstelle 3 ist in Fig.5 nicht dargestellt, da sie von der Bedieneinheit 2 verdeckt ist.

**Fig.6** zeigt beispielhaft und schematisch ein Schienenfahrzeug mit einer kabelgebundenen Bedieneinheit. Es ist der Grundriß eines Schienenfahrzeugs 1 dargestellt, welches für den vollautomatischen Betrieb vorgesehen ist und somit keinen Fahrerstand aufweist. Für einen manuellen Betrieb nimmt der Fahrzeugführer den mittleren Sitzplatz der ersten Reihe ein und verbindet eine Bedieneinheit 2 mittels eines Verbindungskabels mit einer elektrischen Kontaktstelle 3. Dadurch kann eine Abdeckung 10 wesentlich kleiner ausgeführt werden, da sie nur die elektrische Kontaktstelle 3 abdecken muß. Weiters bietet diese Ausführungsform den Vorteil, dass der Fahrzeugführer das Fahrzeug von einem Sitzplatz aus steuern kann.

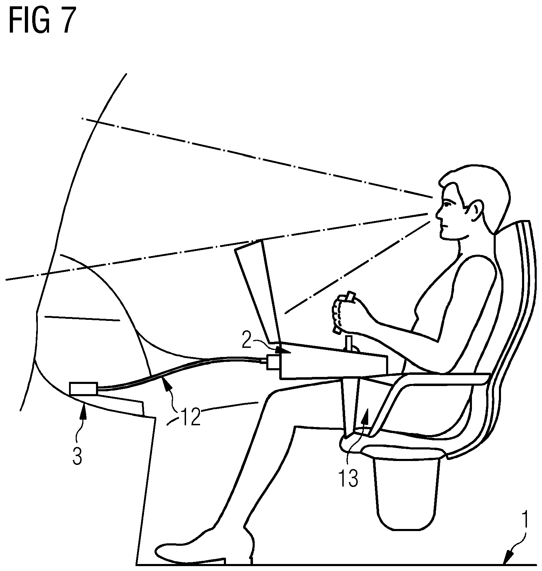

**Fig.7** zeigt beispielhaft und schematisch ein Schienenfahrzeug mit einer kabelgebundenen Bedieneinheit in einer Detaildarstellung. Es ist das Schienenfahrzeug 1 aus Fig.6 in einer Detailseitenansicht auf den Fahrzeugführer dargestellt. Die Bedieneinheit 2 ist mittels einer Halterung 13 fest mit dem Sitz des Fahrzeugführers verbunden, sodass eine stabile Position gewährleistet ist. Fig.7 stellt auch den Sichtbereich des Fahrzeugführers dar, die Formgebung der Bedieneinheit 2 ist so abgestimmt, dass der erforderliche Sichtbereich gewährleistet ist. Die Halterung 13 ermöglicht eine lösbare Befestigung der Bedieneinheit 2 an dem Schienenfahrzeug 1, vorzugsweise einem Sitz. Diese Befestigung ist werkzeuglos herstellbar und trennbar.

### Liste der Bezeichnungen

- 1: Schienenfahrzeug
- 2: Bedieneinheit
- 3: Elektrische Kontaktstelle
- 4: Bildschirm
- 5: Eingabeeinrichtungen
- 6: Antriebssteuerung
- 7: Wagensteuerung
- 8: Kommunikationseinrichtung
- 9: Datenbus
- 10: Abdeckung
- 11: Aufnahme
- 12: Verbindungskabel
- 13: Halterung

## Patentansprüche

1. Steuereinrichtung für ein fahrerstandsloses, vollautomatisch verkehrendes Schienenfahrzeug (1), umfassend eine Bedieneinheit (2) mit allen zum Betrieb des Schienenfahrzeugs (1) erforderlichen Ein- und Ausgabevorrichtungen (4, 5),
**dadurch gekennzeichnet, dass**
die Bedieneinheit (2) mit einem Schienenfahrzeug (1) über eine im Innenraum des Schienenfahrzeugs anordenbare mehrpolige lösbare elektrische Kontaktstelle (3) verbindbar ist, mittels welcher die Bedieneinheit (2) in einer Gebrauchsposition eine Verbindung zu den elektrischen Systemen (6, 7, 8) des Schienenfahrzeugs (1) herstellt und wobei die Bedieneinheit (2) zur Anordnung in einer entsprechend geformten mechanische Schnittstelle des Schienenfahrzeugs (1), welche die Fügerichtung und die Endlage der Bedieneinheit (2) in Gebrauchsposition vorgibt, vorgesehen ist, und wobei diese mechanische Schnittstelle mit einer Blockierung versehen ist, welche eine Entnahme der Bedieneinheit (2) erst nach einer Freigabe ermöglicht.

2. Steuereinrichtung nach Anspruch 1, **dadurch**
**gekennzeichnet, dass** elektrische Kontaktstelle (3) bei entfernter Bedieneinheit (2) mittels einer Abdeckung (10) verschlossen ist.

3. Steuereinrichtung nach einem der Ansprüche 1 oder 2, **dadurch gekennzeichnet, dass** die Bedieneinheit (2) mit Eingabevorrichtungen (5) und einer als Bildschirm (4) ausgebildeten Ausgabevorrichtung ausgestattet ist.

4. Steuereinrichtung nach einem der Ansprüche 1 bis 3, **dadurch gekennzeichnet, dass** die Bedieneinheit (2) als klappbare Einheit nach Art eines mobilen Computers ausgebildet ist.

5. Fahrerstandsloses, vollautomatisch verkehrendes Schienenfahrzeug (1) (1), **dadurch gekennzeichnet, dass** an mindestens einem Stirnbereich im Innenraum des Schienenfahrzeugs (1), eine entsprechend geformte mechanische Schnittstelle für eine Bedieneinheit (2) vorgesehen ist, welche die Fügerichtung und die Endlage der Bedieneinheit (2) in Gebrauchsposition vorgibt, wobei diese mechanische Schnittstelle mit einer Blockierung versehen ist, welche eine Entnahme der Bedieneinheit (2) erst nach einer Freigabe ermöglicht und wobei eine mehrpolige lösbare elektrische Kontaktstelle (3) angeordnet ist, welche eine Verbindung zu den elektrischen Systemen (6, 7, 8) des Schienenfahrzeugs (1) herstellt.

## Claims

1. Control device for a rail vehicle (1) not having a driver's cab and travelling fully automatically, comprising an operating unit (2) having all the input and output devices (4, 5) required for operating the rail vehicle (1),
**characterised in that**
the operating unit (2) can be connected to a rail vehicle (1) via a multi-pole detachable electrical contact point (3) which can be arranged in the interior of the rail vehicle and by means of which the operating unit (2) establishes a connection to the electrical systems (6, 7, 8) of the rail vehicle (1) in a usage position and wherein the operating unit (2) is provided for arrangement in a correspondingly formed mechanical interface of the rail vehicle (1), which defines the jointing direction and the end position of the operating unit (2) in a usage position, and wherein said mechanical interface is provided with a locking device which prevents the operating unit (2) from being removed until an approval for release has been given.

2. Control device according to claim 1, **characterised in that** the electrical contact point (3) is closed by means of a cover (10) when the operating unit (2) is removed.

3. Control device according to one of claims 1 or 2,
**characterised in that** the operating unit (2) is fitted with input devices (5) and an output device designed as a screen (4).

4. Control device according to one of claims 1 to 3, **characterised in that** the operating unit (2) is designed as a foldable unit in the manner of a mobile computer.

5. Rail vehicle (1) not having a driver's cab and travelling fully automatically, **characterised in that** at at least one end region in the interior of the rail vehicle (1) a correspondingly formed mechanical interface for an operating unit (2) is provided, which defines the jointing direction and the end position of the operating unit (2) in the usage position, wherein said mechanical interface is provided with a locking device which prevents the operating unit (2) from being removed until an approval for release has been given, and wherein a multi-pole detachable electrical contact point (3) is arranged which establishes a connection to the electrical systems (6, 7, 8) of the rail vehicle (1).

## Revendications

1. Dispositif de commande pour un véhicule ferroviaire (1) exempt de poste de conduite, qui se déplace de manière tout à fait automatique, comprenant une unité de manoeuvre (2) comprenant tous les dispositifs d'entrée et de sortie (4, 5) requis pour le fonctionnement du véhicule ferroviaire (1), **caractérisé en ce que** l'unité de manoeuvre (2) peut être reliée à un véhicule ferroviaire (1) par l'intermédiaire d'un point de contact électrique amovible multipolaire (3) qui peut venir se placer dans l'espace interne du véhicule ferroviaire, point de contact au moyen duquel l'unité de manoeuvre (2), dans une position d'utilisation, établit une liaison avec les systèmes électriques (6, 7, 8) du véhicule ferroviaire (1) ; et dans lequel l'unité de manoeuvre (2) est prévue à des fins d'agencement dans une interface mécanique du véhicule ferroviaire (1) possédant une configuration correspondante, qui spécifie la direction d'assemblage et la position finale de l'unité de manoeuvre (2) dans la position d'utilisation ; et dans lequel cette interface mécanique est munie d'un blocage qui permet de retirer l'unité de manoeuvre (2) uniquement après un déblocage.

2. Dispositif de commande selon la revendication 1, **caractérisé en ce que** le point de contact électrique (3), lorsque l'unité de manoeuvre (2) a été retirée, est fermé au moyen d'un recouvrement (10).

3. Dispositif de commande selon l'une quelconque des revendications 1 ou 2, **caractérisé en ce que** l'unité de manoeuvre (2) est équipée de dispositifs d'entrée (5) et d'un dispositif de sortie réalisé sous la forme d'un écran (4).

4. Dispositif de commande selon l'une quelconque des revendications 1 à 3, **caractérisé en ce que** l'unité de manoeuvre (2) est réalisée sous la forme d'une unité rabattable à la manière d'un ordinateur mobile.

5. Véhicule ferroviaire (1) exempt de poste de conduite, qui se déplace de manière tout à fait automatique, **caractérisé en ce qu'**on prévoit, contre au moins une zone frontale dans l'espace interne du véhicule ferroviaire (1), une interface mécanique possédant une configuration correspondante pour une unité de manoeuvre (2), qui spécifie la direction d'assemblage et la position finale de l'unité de manoeuvre (2) dans la position d'utilisation ; dans lequel cette interface mécanique est munie d'un blocage qui permet de retirer l'unité de manoeuvre (2) uniquement après un déblocage ; et dans lequel est disposé un point de contact électrique amovible multipolaire (3) qui établit une liaison avec les systèmes électriques (6, 7, 8) du véhicule ferroviaire (1).
